# FASCICULE DE BREVET EUROPEEN

(11) **EP 0 575 260 B1**
(45) Date de publication et mention de la délivrance du brevet: **29.03.1995**
(21) Numéro de dépôt: 93401569.4
(22) Date de dépôt: 18.06.1993
(51) Int. Cl.: C01B 13/11

(54) **Dispositif de formation de molécules gazeuses excitées ou instables et utilisations d'un tel dispositif**
Vorrichtung zur Bildung von angeregten oder instabilen gasförmigen Molekülen und Benutzung dieser Vorrichtung
Apparatus for the formation of excited or instable gaseous molecules and use of said apparatus

(30) Priorité: 19.06.1992 FR 9207486
(43) Date de publication de la demande: 22.12.1993
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Marie, Bruno, F-78130 Maurepas (FR); Guerin, Daniel, Résidence du Val Fleuri - Bât.33, F-77500 Chelles (FR); Larquet, Christian, F-78280 Guyancourt (FR)
(74) Mandataire: Le Moenner, Gabriel

(56) Documents cités:
- EP-A- 0 160 964
- US-A- 4 774 062
- PATENT ABSTRACTS OF JAPAN vol. 004, no. 119 (C-022)23 Août 1980 & JP-A-55 075 905

## Description

La présente invention concerne un dispositif de formation de molécules gazeuses excitées ou instables, du type comprenant un passage de gaz tubulaire, ayant un axe, formé entre une première électrode et un diélectique coaxial à la première électrode et associé à une deuxième électrode, les électrodes étant reliées à une source haute tension et haute fréquence.

Un dispositif à décharge de ce type est connu du document EP-A-0.160.964 qui décrit un ozoneur avec circulation axiale du gaz à exciter dans le passage de gaz.

La présente invention a pour objet de proposer un nouveau dispositif, de configuration compacte, présentant des performances nettement améliorées, une fiabilité accrue et convenant à de nombreuses utilisations.

Pour ce faire, selon une caractéristique de l'invention, la première électrode entoure le diélectrique et comporte une entrée et une sortie de gaz allongées, parallèles à l'axe et sensiblement diamétralement opposées, la deuxième électrode étant appliquée sur la paroi interne du diélectrique.

Selon des caractéristiques plus particulières de l'invention :
- la deuxième électrode est formée par métallisation de la paroi interne du diélectrique dont la paroi externe est recouverte d'une couche d'émail ;
- l'entrée et la sortie de gaz de la première électrode ont une hauteur n'excédant pas l'épaisseur radiale du passage de gaz, qui n'excède pas 2,5 mm ;
- des moyens limiteurs de champ électrique sont prévus au voisinage des extrémités axiales de la deuxième électrode pour éviter la formation de micro-décharges à la surface du diélectrique au niveau de ses extrémités.

Avec un tel agencement du type à décharge à barrière diélectrique, on peut réaliser, sous un volume extrêmement compact, une décharge électrique "froide," dite également, selon les auteurs, décharge corona ou "Silent Discharge" ou "Atmospheric Pressure Glow Discharge", de plusieurs kW, fonctionnant à une pression entre 0,3 x 10⁵ Pa et 3 x 10⁵ Pa, par exemple à la pression atmosphérique, et présentant un rendement de production d'espèces excitées (rapport de la puissance emmagasinée dans le gaz sous forme d'espèces excitées de quanta de vibrations à la puissance totale fournie par le dispositif) amélioré, dépassant 50 %, sans échauffement significatif du gaz en sortie et convenant à de multiples utilisations avec différents gaz.

La présente invention a également pour objet l'utilisation d'un tel dispositif pour la production d'ozone, pour alimenter un laser CO₂ à mélange, pour la production d'atmosphères de nitruration de métaux ou pour la production d'atmosphères réductrices de décapage.

D'autres caractéristiques et avantages de la présente invention ressortiront de la description suivante de modes de réalisation, donnée à titre illustratif mais nullement limitatif, faite en relation avec les dessins annexés, sur lesquels :
- la figure 1 est une vue schématique en coupe transversale d'un dispositif selon l'invention ;
- la figure 2 est une vue en coupe longitudinale d'un mode de réalisation préféré de l'invention ; et
- la figure 3 est un détail, à l'échelle agrandie, d'un mode de réalisation d'une extrémité du diélectrique selon l'invention.

Dans la description qui va suivre et sur les dessins, les éléments identiques ou analogues portent les mêmes chiffres de référence, éventuellement indicés.

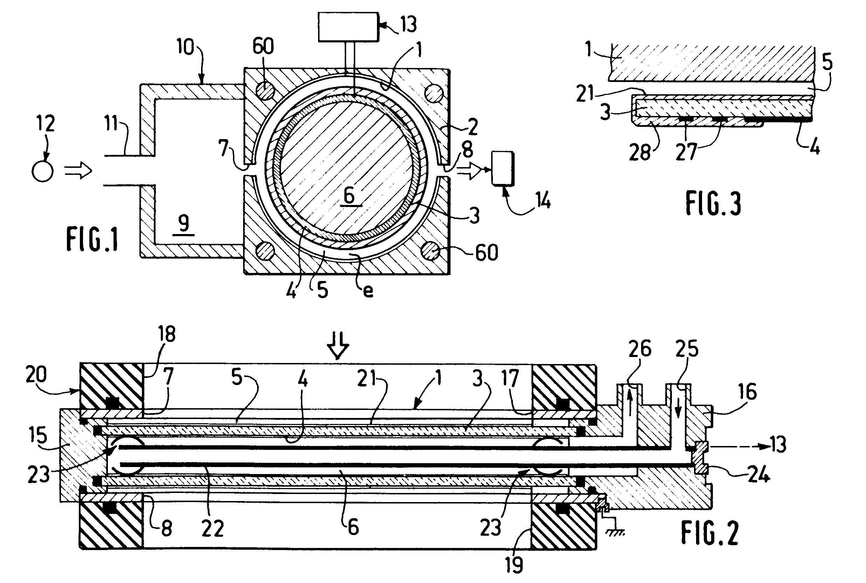

Comme représenté sur la figure 1, le dispositif selon l'invention comprend une première électrode tubulaire 1, formée par exemple par une face interne d'un bloc métallique 2, et dans laquelle est disposé, concentriquement, un ensemble d'un tube en matériau diélectrique 3, par exemple en céramique, sur la face interne duquel est déposée, par métallisation une deuxième électrode 4 (exagérément épaissie sur la figure 1 pour une meilleure compréhension). L'ensemble du diélectrique 3 et de la deuxième électrode 4 définit ainsi, extérieurement avec la première électrode 1, un passage tubulaire de gaz 5 et, intérieurement, un volume interne 6 dans lequel on fait circuler un réfrigérant, avantageusement un Fréon® pour son caractère électronégatif. Le passage de gaz interne 5 a une extension axiale inférieure à 1 mètre, typiquement inférieure à 50 cm et son épaisseur radiale e n'excède pas 3 mm et est typiquement inférieure à 2,5 mm.

Le bloc 2 comporte, diamétralement opposées, deux fentes longitudinales 7 et 8 formant respectivement l'entrée du gaz à exciter dans le passage 5 et la sortie du flux de gaz comportant des molécules excitées ou instables. Les fentes 7 et 8 s'étendent sur toute la longueur axiale de la cavité 5 et ont une hauteur qui n'excède pas l'épaisseur e et est typiquement sensiblement identique à cette dernière. Le corps 2 est formé avantageusement, à la périphérie de la première électrode 1, avec une pluralité de conduits 60 pour le passage d'un réfrigérant, par exemple de l'eau. L'entrée de gaz 7 communique avec une chambre ou plenum d'homogénéisation 9 formé dans un boîtier 10 accolé au bloc 2 et comportant une tubulure 11 d'amenée de gaz, à une pression comprise entre 0,3 x 10⁵ Pa et 3 x 10⁵ Pa, en provenance d'une source de gaz 12. Les électrodes 1 et 4 sont reliées à un générateur électrique haute tension et haute fréquence 13 fonctionnant à une fréquence supérieure à 15 kHz, les limites technologiques actuelles étant 60 kHz pour une puissance de l'ordre de 10 kW. Le flux gazeux contenant les espèces excitées disponible à la sortie 8 est adressé à un poste utilisateur 14 comme on le verra plus avant.

Dans le mode de réalisation de la figure 2, on reconnaît le tube diélectrique 3, d'une épaisseur de l'ordre de 2 mm avec sa métallisation interne 4 constituant la seconde électrode, la première électrode 1 étant constituée ici par un tube métallique comportant des fentes diamétralement opposées formant l'entrée 7 et la sortie 8. La première électrode 1 et le tube diélectrique 3 sont assemblés pour constituer un ensemble coaxial étanche grâce à un premier embout d'extrémité isolant 15 et un deuxième embout d'extrémité isolant 16, l'ensemble étant introduit à coulissement étanche dans un alésage 17 d'un corps 20 parallélépipédique comportant une ouverture allongée d'entrée 18 dans laquelle débouche l'entrée 7, et une ouverture allongée de sortie 19 dans laquelle débouche la sortie 8 de la première électrode.

Si les céramiques, utilisées pour la réalisation du tube diélectrique 3, présentent d'excellentes propriétés électriques convenant pour la réalisation de condensateurs, elles présentent généralement des surfaces granuleuses, même lorsqu'elles sont polies, qui entraînent des comportements amoindris sous des charges corona. Pour y remédier, selon un aspect de l'invention, la surface externe du diélectrique 3 est couverte d'une fine couche d'émail 21, inférieure à 100 microns, typiquement d'environ 20 microns. D'autre part, si le contact intime entre l'électrode interne et le diélectrique 3 permet d'éviter la formation de micro-décharges le long de ce dernier, même en cas de mise en oeuvre de très grandes puissances spécifiques autorisées par le couple diélectrique 3 - émail 21, il se pose des problèmes de fort renforcement local du champ électrique aux extrémités de l'électrode interne 4. Pour y remédier, selon le mode de réalisation de la figure 2, l'électrode interne 4 est alimentée par un conducteur tubulaire central 22 relié aux extrémités opposées de l'électrode 4 par des contacts métalliques souples à profil évolutif 23 dont le profil permet une évolution lente et continue de l'équipotentielle formée par l'électrode 4 en évitant l'effluvage dans le liquide de refroidissement, le risque d'effluvage étant encore considérablement réduit en utilisant comme réfrigérant un chlorofluorocarbone en raison de son caractère fortement électronégatif. En effet, selon un aspect de l'invention, le conducteur tubulaire 22 traverse le deuxième embout isolant 16 en étant obturé par un bloc métallique 24 formant connecteur de raccordement à la source 13, l'embout 16 comportant un passage radial 25 débouchant dans le conducteur 22 et un deuxième passage radial 26 débouchant dans la chambre interne 6 pour réaliser dans celle-ci une circulation d'huile de refroidissement. En variante, les moyens limiteurs de pointe de champ électrique au niveau des extrémités de l'électrode haute tension 4 peuvent être réalisés par un épaississement, avantageusement progressif, vers l'intérieur de l'extrémité du tube diélectrique 3 ou par l'adjonction, entre l'extrémité du diélectrique 3 et l'extrémité en vis-à-vis de la première électrode 1, d'une bague diélectrique dont les faces annulaires sont émaillées en même temps que le tube diélectrique 3 et dont la périphérie est avantageusement métallisée.

Une autre variante de ces moyens limiteurs de pic de champ électrique est représentée sur la figure 3, sous la forme d'anneaux de garde métalliques 27 disposés dans le prolongement de l'extrémité de l'électrode haute tension 4 et recouverts, ainsi que l'extrémité de l'électrode 4, d'une couche d'émail interne 28 de même nature que la couche d'émail externe 21.

Comme sus-mentionné, le dispositif selon l'invention peut être utilisé pour créer des espèces excitées de différents gaz.

Si le gaz introduit dans le dispositif contient majoritairement de l'azote, typiquement à une teneur supérieure à 78 % dans un mélange contenant typiquement de l'oxygène, ce dispositif crée essentiellement de l'azote excité vibrationnellement, mais aussi de l'azote atomique et de l'azote moléculaire excité sur le niveau A³ Σg⁺. L'azote excité vibrationnellement trouve deux applications majeures, à savoir les lasers de puissance CO₂ à mélange, où l'azote excité est rapidement mélangé avec du CO₂ auquel il transfère son énergie, créant ainsi l'inversion de population nécessaire à l'effet laser, et la nitruration de surfaces métalliques avec échauffement limité du métal. La teneur en azote joue un rôle important. Les impuretés CO₂, CO, H₂ et surtout H₂O, qui désexcitent l'azote vibrationnel, doivent être limitées. En présence d'oxygène dans l'azote, le rendement de production baisse à peu près proportionnellement avec la concentration d'oxygène. Pour les traitements de nitruration, un azote contenant 5 % d'oxygène, avantageusement obtenu par perméation ou adsorption, est un bon compromis, dans la mesure où le prix du gaz est considérablement abaissé par rapport à celui de l'azote pur sans que le rendement de production d'espèces excitées soit diminué notablement.

Le dispositif selon l'invention peut être avantageusement utilisé pour la production d'ozone à partir d'air sec ou à partir d'oxygène pur. Dans le cas de l'oxygène, le dispositif fournit de l'ozone, de l'oxygène singulet et de l'oxygène atomique. Les quantités respectives de ces espèces produites dépendent de nombreux paramètres, en particulier la température du gaz (dépendant du débit de gaz pour une puissance donnée) et la fréquence du générateur électrique. La température du gaz détermine en effet le taux de destruction ultérieur de l'ozone, et donc l'évolution de l'oxygène atomique, et la fréquence influence l'énergie des électrons et donc l'excitation et la dissociation de l'oxygène moléculaire. Outre les applications de dépollution et de stérilisation, les produits ainsi générés sont utilisés pour modifier les propriétés de surface de polymères, en particulier leurs propriétés d'adhésion et de mouillabilité.

En alimentant le dispositif avec de l'hydrogène ou un mélange à base d'hydrogène (par exemple hydrogène/argon), on crée des espèces excitées ou atomiques à pouvoir extrêmement réducteur qui sont utilisées par exemple pour le décapage.

Quoique la présente invention ait été décrite en relation avec des modes de réalisation particuliers, elle ne s'en trouve pas limitée pour autant mais est au contraire susceptible de modifications et de variantes qui apparaîtront à l'homme de l'art.

## Revendications

1. Dispositif de formation de molécules gazeuses excitées ou instables, comprenant un passage de gaz tubulaire (5) ayant un axe, formé entre une première électrode (1) et un diélectrique (3), coaxial à la première électrode et associé à une deuxième électrode (4), les électrodes étant reliées à une source haute tension et haute fréquence (13), caractérisé en ce que la première électrode (1) entoure le diélectrique (3) et comporte une entrée (7) et une sortie (8) de gaz allongées, parallèles à l'axe et sensiblement diamétralement opposées, la deuxième électrode (4) étant appliquée sur la paroi interne du diélectrique (3).

2. Dispositif selon la revendication 1, caractérisé en ce que la deuxième électrode (4) est formée par métallisation de la paroi interne du diélectrique (3).

3. Dispositif selon la revendication 1 ou la revendication 2, caractérisé en ce que l'entrée (7) et la sortie (8) de gaz ont une hauteur n'excédant pas l'épaisseur radiale (e) du passage de gaz (5).

4. Dispositif selon l'une des revendications précédentes, caractérisé en ce que la paroi externe du diélectrique est recouverte d'une fine couche d'émail (21).

5. Dispositif selon l'une des revendications précédentes, caractérisé en ce qu'il comporte des moyens limiteurs de champ électrique (23 ; 27) au voisinage des extrémités axiales de la deuxième électrode (4) pour éviter la formation de micro-décharges aux extrémités du diélectrique (3).

6. Dispositif selon la revendication 5, caractérisé en ce que les moyens limiteurs de champ comprennent des contacts profilés (23) entre la deuxième électrode (4) et un conducteur central (22).

7. Dispositif selon la revendication 5 ou la revendication 6, caractérisé en ce que les moyens limiteurs de champ comprennent des anneaux de garde (27) formés sur le diélectrique (3) dans le prolongement axial de la deuxième électrode (4).

8. Dispositif selon l'une des revendications précédentes, caractérisé en ce qu'il comporte des moyens (6 ; 25, 22, 26) pour faire circuler un réfrigérant dans l'ensemble constitué du diélectrique (3) et de la deuxième électrode (4).

9. Dispositif selon l'une des revendications précédentes, caractérisé en ce que les électrodes (1 ; 4) et le diélectrique (3) sont réalisés sous la forme d'un sous-ensemble cylindrique insérable dans un corps (20) comportant des passages allongés (18, 19) d'entrée et de sortie de gaz.

10. Dispositif selon l'une des revendications précédentes, caractérisé en ce que l'épaisseur radiale (e) du passage de gaz (5) n'excède pas 2,5 mm.

11. Dispositif selon la revendication 9, caractérisé en ce qu'il comprend une chambre d'homogénéisation (9) entre le passage d'entrée (18, 7) et une conduite d'amenée de gaz (11).

12. Dispositif selon l'une des revendications 1 à 11, caractérisé en ce que l'entrée de gaz (7) est reliée à une source de gaz (12) qui est l'air.

13. Dispositif selon la revendication 11, caractérisé en ce que l'entrée de gaz (7) est reliée à une source de gaz (12) qui est l'oxygène.

14. Dispositif selon la revendication 11, caractérisé en ce l'entrée de gaz (7) est reliée à une source de gaz (12) qui est l'azote.

15. Dispositif selon la revendication 11, caractérisé en ce l'entrée de gaz (7) est reliée à une source de gaz (12) qui est l'hydrogène.

16. Utilisation du dispositif selon la revendication 12 ou la revendication 13, pour la production d'ozone.

17. Utilisation du dispositif selon la revendication 12 ou la revendication 14 pour alimenter un laser CO₂ à mélange.

18. Utilisation du dispositif selon la revendication 14 pour la production d'atmosphères de nitruration de métaux.

19. Utilisation du dispositif selon la revendication 15 pour la production d'atmosphères réductrices.

## Claims

1. Device for forming excited or unstable gaseous molecules, comprising a tubular gas passage (5) having an axis, formed between a first electrode (1) and a dielectric (3), coaxial with the first electrode and associated with a second electrode (4), the electrodes being connected to a high-voltage, high-frequency source (13), characterised in that the first electrode (1) surrounds the dielectric (3) and has an elongate gas inlet (7) and outlet (8), parallel to the axis and substantially diametrically opposite, the second electrode (4) being applied to the internal wall of the dielectric (3).

2. Device according to Claim 1, characterised in that the second electrode (4) is formed by metallisation of the internal wall of the dielectric (3).

3. Device according to Claim 1 or Claim 2, characterised in that the gas inlet (7) and outlet (8) have a height not exceeding the radial thickness (e) of the gas passage (5).

4. Device according to one of the preceding claims, characterised in that the external wall of the dielectric is covered with a fine layer of enamel (21).

5. Device according to one of the preceding claims, characterised in that it includes electrical field limiting means (23; 27) clone to the axial ends of the second electrode (4) in order to prevent the formation of micro-discharges at the ends of the dielectric (3).

6. Device according to claim 5, characterised in that the field limiting means comprise profiled contacts (23) between the second electrode (4) and a central conductor (22).

7. Device according to Claim 5 or Claim 6, characterised in that the field limiting means comprise guard rings (27) formed on the dielectric (3) axially in line with the second electrode (4).

8. Device according to one of the preceding claims, characterised in that it includes means (6; 25, 22, 26) for circulating a refrigerant in the unit consisting of the dielectric (3) and the second electrode (4).

9. Device according to one of the preceding claims, characterised in that the electrodes (1; 4) and the dielectric (3) are produced in the form of a cylindrical subassembly which can be inserted in a body (20) having elongate gag inlet and outlet passages (18, 19).

10. Device according to one of the preceding claims, characterised in that the radial thickness (e) of the gas passage (5) does not exceed 2.5 mm.

11. Device according to claim 9, characterised in that it comprises a homogenisation chamber (9) between the inlet passage (18, 7) and a gas feed pipe (11).

12. Device according to one of Claims 1 to 11, characterized in that the gas inlet (7) is connected to a source of gas (12) which is air.

13. Device according to Claim 11, characterised in that the gas inlet (7) is connected to a source of gas (12) which is oxygen.

14. Device according to Claim 11, characterised in that the gas inlet (7) is connected to a source of gas (12) which is nitrogen.

15. Device according to Claim 11, characterised in that the gas inlet (7) is connected to a source of gas (12) which is hydrogen.

16. Use of the device according to Claim 12 or Claim 13, for the production of ozone.

17. Use of the device according to Claim 12 or Claim 14 for supplying a CO₂ mixture laser.

18. Use of the device according to Claim 14 for producing metal nitriding atmospheres.

19. Use of the device according to Claim 15 for producing reducing atmospheres.

## Patentansprüche

1. Vorrichtung zur Bildung angeregter oder instabiler Gasmoleküle, die einen röhrenförmigen Gasdurchtritt (5) mit einer Achse aufweist, der zwischen einer ersten Elektrode (1) und einem Dielektrikum (3) koaxial zu der ersten Elektrode und einer zweiten Elektrode (4) zugeordnet gebildet ist, wobei die Elektroden mit einer Hochspannungs-Hochfrequenzquelle (13) verbunden sind, dadurch gekennzeichnet, daß die erste Elektrode (1) das Dielektrikum (3) umgibt und einen langgestreckten Gaseinlaß (7) und einen langgestreckten Gasauslaß (8) aufweist, die parallel zu der Achse und im wesentlichen diametral gegenüberliegend sind, wobei die zweite Elektrode (4) auf der Innenwand des Dielektrikums (3) aufgetragen ist.

2. Vorrichtung nach Anspruch 1, dadurch gekennzeichnet, daß die zweite Elektrode (4) durch Metallisierung der Innenwand des Dielektrikums (3) gebildet ist.

3. Vorrichtung nach Anspruch 1 oder 2, dadurch gekennzeichnet, daß der Gaseinlaß (7) und der Gasauslaß (8) eine Höhe haben, welche die radiale Dicke (e) des Gasdurchtritts (5) nicht übersteigt.

4. Vorrichtung nach einem der vorhergehenden Ansprüche, dadurch gekennzeichnet, daß die Außenwand des Dielektrikums mit einer dünnen Emailleschicht (21) überzogen ist.

5. Vorrichtung nach einem der vorhergehenden Ansprüche, dadurch gekennzeichnet, daß sie Einrichtungen zur Begrenzung des elektrischen Feldes (23; 27) im Bereich der axialen Enden der zweiten Elektrode (4) aufweist, um die Bildung von Mikroentladungen an den Enden des Dielektrikums (3) zu verhindern.

6. Vorrichtung nach Anspruch 5, dadurch gekennzeichnet, daß die Einrichtungen zur Begrenzung des Feldes Profilkontakte (23) zwischen der zweiten Elektrode (4) und einem mittigen Leiter (22) aufweisen.

7. Vorrichtung nach Anspruch 5 oder 6, dadurch gekennzeichnet, daß die Einrichtungen zur Begrenzung des Feldes Schutzringe (27) aufweisen, die auf dem Dielektrikum (3) in der axialen Verlängerung der zweiten Elektrode (4) gebildet sind.

8. Vorrichtung nach einem der vorhergehenden Ansprüche, dadurch gekennzeichnet, daß sie Einrichtungen (6; 25, 22, 26) zum Zirkulieren eines Kühlmittels in der aus dem Dielektrikum (3) und der zweiten Elektrode (4) gebildeten Einheit aufweist.

9. Vorrichtung nach einem der vorhergehenden Ansprüche, dadurch gekennzeichnet, daß die Elektroden (1; 4) und das Dielektrikum (3) in Form einer zylindrischen Untereinheit ausgebildet sind, die in einen langgestreckte Gaseinlaß- und Gasauslaßdurchtritte (18, 19) aufweisenden Körper (20) einfügbar ist.

10. Vorrichtung nach einem der vorhergehenden Ansprüche, dadurch gekennzeichnet, daß die radiale Dicke (e) des Gasdurchtritts (5) 2,5 mm nicht übersteigt.

11. Vorrichtung nach Anspruch 9, dadurch gekennzeichnet, daß sie eine Homogenisierungskammer (9) zwischen dem Gaseinlaßdurchtritt (18, 7) und einer Gaszufuhrleitung (11) aufweist.

12. Vorrichtung nach einem der Ansprüche 1 bis 11, dadurch gekennzeichnet, daß der Gaseinlaß (7) mit einer Gasquelle (12) verbunden ist, welche Luft ist.

13. Vorrichtung nach Anspruch 11, dadurch gekennzeichnet, daß der Gaseinlaß (7) mit einer Gasquelle (12) verbunden ist, die Sauerstoff ist.

14. Vorrichtung nach Anspruch 11, dadurch gekennzeichnet, daß der Gaseinlaß (7) mit einer Gasquelle (12) verbunden ist, welche Stickstoff ist.

15. Vorrichtung nach Anspruch 11, dadurch gekennzeichnet, daß der Gaseinlaß (7) mit einer Gasquelle (12) verbunden ist, welche Wasserstoff ist.

16. Verwendung der Vorrichtung nach Anspruch 12 oder 13 für die Erzeugung von Ozon.

17. Verwendung der Vorrichtung nach Anspruch 12 oder 14 zur Versorgung eines CO₂-Gemischlasers.

18. Verwendung der Vorrichtung nach Anspruch 14 zur Erzeugung von Nitrierungsatmosphären für Metalle.

19. Verwendung der Vorrichtung nach Anspruch 15 für die Erzeugung reduzierender Atmosphären.
